# EUROPÄISCHE PATENTSCHRIFT

(11) **EP 0 699 692 B1**
(45) Veröffentlichungstag und Bekanntmachung des Hinweises auf die Patenterteilung: **23.05.2001**
(21) Anmeldenummer: 95113356.0
(22) Anmeldetag: 25.08.1995
(51) Int. Cl.: C08F 251/02, C09J 151/08

(54) **Wässrige Dispersionen für Klebstoffe**
Aqueous dispersions for adhesives
Dispersions aqueuses pour adhésifs

(30) Priorität: 02.09.1994 DE 4431344
(43) Veröffentlichungstag der Anmeldung: 06.03.1996
(73) Patentinhaber: Clariant GmbH, 65929 Frankfurt am Main (DE)
(72) Erfinder: Gerharz, Bettina, Dr., D-55118 Mainz (DE); Hintz, Helmut, D-61184 Karben (DE)

(56) Entgegenhaltungen:
- EP-A- 0 253 518
- EP-A- 0 297 900
- EP-A- 0 351 193
- GB-A- 658 426
- GB-A- 903 654
- US-A- 3 882 057
- US-A- 4 128 518
- US-A- 4 360 635
- US-A- 4 427 809
- US-A- 4 560 724
- US-A- 5 004 769

## Beschreibung

Die vorliegende Erfindung betrifft wäßrige Dispersionen, die Celluloseether in zumindest teilweise gepfropfter Form enthalten, Verfahren zu deren Herstellung sowie die vorteilhafte Verwendung von Dispersionen, die Celluloseether in zumindest teilweise gepfropfter Form enthalten, zum Verkleben insbesondere von Polyolefinen.

Wäßrige Copolymerdispersionen auf Basis Vinylacetat und Ethylen finden in weiten Bereichen des Klebstoffsektors Anwendung. Vor allem auf dem Verpakkungssektor, bei Fußbodenklebstoffen, im Möbelfolienbereich und in vielen weiteren Anwendungsgebieten sind die Klebstoffe zu einem sehr hohen Niveau optimiert. Die bisher marktgängigen Klebstoffe erfüllen die Anforderungen betreffend der gewünschten Klebkraft, gemessen als Scher- und Schälfestigkeit, zwar auf den gängigen Materialien wie PVC, Polyester, Polyurethanen, nicht jedoch auf den PVC-Ersatzmaterialien, insbesondere Polyolefinbelägen und Polyolefinfolien, die aufgrund der Entsorgungsproblematik der halogenierten Kunststoffprodukte anstelle von PVC-Folien und Fußbodenbelägen verstärkt zum Einsatz kommen.

Zur Lösung der bei diesen Materialien auftretenden Benetzungs- und Verklebungsschwierigkeiten werden zur Zeit verschiedene Wege beschritten, beispielsweise die Verwendung Lösemittel-haltiger Primer (EP-A 0 539 710) oder die Entwicklung von Klebstoffen auf Basis modifizierter Kautschuke (Polym. Prep., Jpn. Engl. Ed. 38(2), S.E658, (1989)). Andere Ansätze liegen in einer Modifizierung der Polyolefinmaterialien durch Gasphasenfluorierung. Dabei wird die Polymeroberfläche durch die Reaktion mit Flour funktionalisiert. Stand der Technik ist, daß bei Polyolefinen nur durch Fluorierung die gewünschten Verklebungsfestigkeiten erreicht werden können (Kleben und Dichten, 38(6), 1994, 21-24).

Speziell auf dem Gebiet der wäßrigen Fußbodenklebstoffe wird eine Lösung zur Verklebung unbehandelter Polyolefinbeläge dringend gesucht, da sich bei den unterschiedlichen Lagerbedingungen der Belagsmaterialien die Wirkung der Vorbehandlung über den Lagerzeitraum nicht erhalten läßt und auch jede andere Modifizierung einen zusätzlichen weiteren Arbeitsgang erfordert und damit Kosten verursacht.

Fußbodenklebstoffe auf Basis wäßriger Dispersionen zur Verklebung aller gängigen Fußbodenbeläge, einschließlich Parkett, haben sich auf dem Markt etabliert. Sie sind in den Patentanmeldungen DE-A 23 01 497 und EP-A 0 221 461 beschrieben und bestehen aus einem wäßrigen Bindemittel in Form einer Kunststoffdispersion, Harzen und Füllstoffen. Das Harz ist in der Regel aus Kolophonium, Tallharzen oder auch Estern der genannten Naturharze aufgebaut und wird in organischen, niedrigsiedenden Lösemitteln mit einem Flammpunkt unter 55 ° C zur Anwendung gebracht. Derartige Fußbodenklebstoffe, die 3 bis 5 Gew.-% Toluol oder auch Xylol enthalten, gelten mittlerweile als überholt und sind aufgrund der bestehenden Gefahrstoffverordnung nur noch bedingt einsetzbar.

Für die Modifikation von Klebstoffen sind bevorzugt Harzzubereitungen verwendet worden, die zwar als Lösemittel-frei gelten, jedoch hochsiedende Lösemittel wie Butyldiglykol, Butyldiglykolacetat, Dibutylphthalat oder auch hochsiedende Ether wie Diethylenglykolmonobutylether oder auch Polyethylenglykoldimethylether, Ethylenglykoldimethylether, Di- und Triethylenglykoldimethylether sowie polymere Weichmacher enthalten. In US-A 4,654,388 und DE-A 20 19 233 werden Fußbodenklebstoffe beschrieben, die aus einem filmbildenden Vinylacetat/Ethylen/Acrylatlatex, Füllstoff, Diethylenglykolmonobutylether beziehungsweise Dibutylphthalat und einer Mischung aus Kolophoniumharz und -estern bestehen.

Naturharz-freie Klebstoffe auf der Basis Vinylacetat/Ethylen können durch Einbau funktioneller Comonomere verbessert werden. In GB-A 1 407 827 und EP-A 0 327 376 werden dazu hydrolysierbare Siliciumverbindungen copolymerisiert. EP-A 0 365 980 führt die Polymerisation in Gegenwart von 1 bis 5 Gew.-% einer olefinisch ungesättigten Carbonsäure durch. Gemäß EP-A 0 216 210 ist sogar die gleichzeitige Anwesenheit von ethylenisch ungesättigten Carbonsäuren und Hydroxyalkyl-funktionellen Verbindungen erforderlich.

Ein alternatives Verfahren zur Herstellung eines verbesserten Klebstoffs auf der Basis Vinylacetat/Ethylen schlägt den Einsatz bestimmter Dispergiermittel vor. In DE-A 27 18 716 werden dazu Vinylacetat und Ethylen in Gegenwart vom 1 bis 8 Gew.-% eines nicht ionogenen Tensids vom Typ eines Polyglykolethers sowie 0,1 bis 1 Gew.-% eines wasserlöslichen hochmolekularen Schutzkolloids polymerisiert. Auch EP-A 0 295 727 schlägt die Polymerisation in Gegenwart von üblichen Emulgatoren und Schutzkolloiden vor. Die Schutzkolloide werden in einer Menge von 0,02 bis 2 Gew.-%, bezogen auf die Emulsion, entsprechend 0,005 bis 1,3 Gew.-%, bezogen auf die Monomere, zugesetzt. In diesen Dispersionen auf Basis von Vinylacetat und Ethylen werden geringe Mengen Celluloseether als Schutzkolloide verwendet, um die Stabilität zu erhöhen und feinteilige Dispersionen herstellen zu können. Dabei wird die Schutzkolloidkomponente im Bereich bis zu 1,3 Gew-% eingesetzt. Derartig hergestellte Klebstoffe zeigen hervorragende Klebkraft, beispielsweise zu Polyvinylchlorid-, Polystyrol- und Polyestermaterialien, nicht aber zu unbehandelten, nicht modifizierten Polyolefinmaterialien (Vergleichsbeispiel 2).

Die mit den bekannten gängigen Kunststoffdispersionen und Klebstoffrezepturen hergestellten Fußbodenklebstoffe sind nicht in der Lage, die Beläge auf Polyolefinbasis mit genügender Festigkeit zu verkleben. Um die geforderten Bedingungen auch an unbehandelten Polyolefinbelägen erfüllen zu können, sind die erfindungsgemäßen Copolymerisatdispersionen entwickelt worden.

Die Aufgabe der vorliegenden Erfindung bestand also darin, eine Klebstoffdispersion auf Basis Ethylen und Vinylacetat mit einer Glasübergangstemperatur von 0 bis -40°C zu entwickeln, die die auf den gängigen Materialien geltenden Richtwerte zur Verklebung überschreitet und diese Richtwerte ohne Zusatz von Primern oder Lösemitteln für unbehandelte Polyolefinmaterialien bestätigt (zur chemischen und physikalischen Oberflächenbehandlung vgl. "Kleben: Grundlagen Technologie Anwendungen", Springer-Verlag, Berlin 1986).

Diese Aufgabe konnte gelöst werden durch eine wäßrige Dispersion, die durch Polymerisation von Vinylacetat, Ethylen und weiteren Vinylestern, Acrylsäureestern, Methacrylsäureestern oder Maleinsäurediestern in Gegenwart von 0,05 bis 0,95 Gew.-% *α*,*β*-ungesättigten Carbonsäuren und 1,5 bis 20 Gew.-% Celluloseethern, jeweils bezogen auf die Gesamtmenge der eingesetzten Monomeren, erhalten worden ist und die Celluloseether in zumindest teilweise gepfropfter Form enthält.

Gegenstand der vorliegenden Erfindung ist also eine wäßrige Dispersion, die einen Celluloseether in zumindest teilweise gepfropfter Form und ein Copolymerisat mit einer Glasübergangstemperatur von -40 bis 0 °C enthält, hergestellt durch Polymerisation von Vinylacetat, Ethylen sowie Comonomeren aus der Gruppe Vinylester aliphatischer (C₃-C₁₈)-Carbonsäuren, Acrylsäureester, Methacrylsäureester und Maleinsäurediester aliphatischer (C₁-C₁₈)-Alkohole in Gegenwart von 0,05 bis 0,95 Gew.-% α,β-ungesättigten Carbonsäuren, 0 bis 0,95 Gew.-% Epoxy- oder Hydroxylgruppen tragenden Methacrylsäureestern oder Acrylsäureestern und 1,5 bis 20 Gew.-% Celluloseethern, jeweils bezogen auf die Gesamtmenge der eingesetzten Monomeren.

Geeignete Vinylester sind vorzugsweise Vinylester von aliphatischen Monocarbonsäuren mit 3 bis 12 Kohlenstoffatomen, beispielsweise Vinylpropionat, Vinylbutyrat, Vinylcaproat, Vinyllaurat, Vinyldecanoat und ® Versaticsäurevinylester (Shell-Chemie).

Geeignete Acrylate und Methacrylate sind vorzugsweise Acrylsäureester von einwertigen Alkoholen mit 1 bis 12 Kohlenstoffatomen, beispielsweise Methylacrylat, Ethylacrylat, Butylacrylat, 2-Ethylhexylacrylat, sowie Methacrylsäureester von einwertigen Alkoholen mit 1 bis 12 Kohlenstoffatomen, beispielsweise Methylmethacrylat, Ethylmethacrylat, Butylmethacrylat und 2-Ethylhexylmethacrylat. Geeignete Maleinsäurediester sind vorzugsweise Ester von einwertigen aliphatischen Alkoholen mit 1 bis 12 Kohlenstoffatomen, beispielsweise Dibutylmaleinat, Dihexylmaleinat und Dioctylmaleinat. Die Alkoholreste der Acryl-, Methacrylsäureester und Maleinsäurediester können aus linearen oder verzweigten Alkylketten bestehen.

Die Mengenanteile von Vinylacetat, Ethylen und den Comonomeren aus der Gruppe der Vinylester, Acrylate, Methacrylester und Maleinsäurediester werden derart gewählt, daß Kunststoffdispersionen mit einer Glasübergangstemperatur der Copolymerisate im Bereich von -40 bis 0°C, vorzugsweise im Bereich von -20 bis -5°C, entstehen. Die Dispersion kann auch einen breiten Einfrierbereich, sowie eine zweite Glasübergangstemperatur oder einen Schmelzbereich enthalten, solange das Polymerisat eine Glasübergangstemperatur von vorzugsweise -20 bis -5°C aufweist, so daß eine minimale Filmbildetemperatur unterhalb von 0 ° C sichergestellt ist. Vorzugsweise sind die erfindungsgemäßen Copolymerisate aufgebaut aus 50 bis 70 Gew.-% Vinylacetat, 1,5 bis 9,5 Gew.-% Ethylen sowie mehr als 25 Gew.-% Monomeren aus der Gruppe Vinylester aliphatischer (C₃-C₁₂)-Carbonsäuren, Acrylsäureester, Methacrylsäureester und Maleinsäurediester aliphatischer (C₁-C₁₂)-Alkohole, jeweils bezogen auf die Gesamtmenge der eingesetzten Monomeren.

Insbesondere enthalten die erfindungsgemäßen Copolymerisate mehr als 25 Gew.-% Monomereinheiten aus der Gruppe 2-Ethylhexylacrylat und Vinylester von α-Dialkyl-verzweigten (C₁₀-C₁₁)-Carbonsäuren, beispielsweise ® Veova 10 und ® Veova 11 (Shell-Chemie).

Als α,β-ungesättigte Carbonsäuren enthalten die erfindungsgemäßen Polymerisate vorzugsweise 0,1 bis 0,7 Gew.-%, insbesondere 0,15 bis 0,45 Gew.-%, Acrylsäure und/oder Methacrylsäure, bezogen auf die Gesamtmenge der eingesetzten Monomeren.

Die in den erfindungsgemäßen Copolymerisaten optional enthaltenen Methacryl-bzw. Acrylsäureester, die mit Epoxidgruppen oder Hydroxylgruppen modifiziert sind, sind vorzugsweise Glycidylmethacrylat, Hydroxyethylmethacrylat, Hydroxyethylacrylat, Hydroxypropylacrylat, Hydroxypropylmethacrylat. Der Anteil dieser Comonomere in den erfindungsgemäßen Polymerisaten beträgt vorzugsweise 0,1 bis 0,7 Gew.-%, insbesondere 0,15 bis 0,45 Gew.-%, bezogen auf die Gesamtmenge der eingesetzten Monomeren. In vergleichbarer Menge können auch Methacryl- bzw. Acrylsäureamide, die mit Hydroxylgruppen modifiziert sind, beispielsweise N-Methylolacrylamid, enthalten sein.

In zumindest teilweise gepfropfter Form enthalten die erfindungsgemäßen Dispersionen vorzugsweise 1,7 bis 15 Gew.-%, insbesondere 2 bis 10 Gew.-%, Celluloseether, bezogen auf die Gesamtmenge der eingesetzten Monomeren, beispielsweise Methylcellulose, Carboxymethylcellulose, Hydroxyethylcellulose, insbesondere hydrophob modifizierte Hydroxyethylcellulose, deren Herstellung in J. Appl. Polym. Sci., Vol. 40, 333-343, 1990, beschrieben ist.

Die Teilchengröße der Polymerpartikel der erfindungsgemäßen Dispersionen liegt im Bereich von 0,02 bis 1 µm, vorzugsweise im Bereich von 0,05 bis 0,4 µm.

Der Feststoffgehalt der Dispersionen beträgt 40 bis 65 Gew.-%, vorzugsweise 45 bis 60 Gew.-%.

Gegenstand der vorliegenden Erfindung ist auch ein Verfahren zur Herstellung einer wäßrigen Dispersion durch Polymerisation von Vinylacetat, Ethylen sowie Comonomeren aus der Gruppe Vinylester aliphatischer (C₃-C₁₈)-Carbonsäuren, Acrylsäureester, Methacrylsäureester und Maleinsäurediester aliphatischer (C₁-C₁₈)-Alkohole in Gegenwart von 0,05 bis 0,95 Gew.-% *α*,*β*-ungesättigen Carbonsäuren, 0 bis 0,95 Gew.-% Epoxy- oder Hydroxylgruppen tragende Methacrylsäureester oder Acrylsäureester und 1,5 bis 20 Gew.-% Celluloseether, jeweils bezogen auf die Gesamtmenge der eingesetzten Monomeren.

Die Dispersionsherstellung findet vorzugsweise in einem Druckautoklaven statt. Dazu werden zu der im Reaktionsgefäß ganz oder teilweise vorgelegten wäßrigen Lösung des Schutzkolloids oder Schutzkolloid-Emulgator-Gemisches die Monomere bei der gewünschten Reaktionstemperatur kontinuierlich oder diskontinuierlich zugesetzt.

Für die Polymerisation der Comonomeren können alle radikalbildenden Polymerisationsinitiatoren in den üblichen Mengen eingesetzt werden. Geeignete Initiatioren sind beispielsweise Alkali- und Ammoniumsalze der Peroxysäuren, wie Kalium-, Natrium- und Ammoniumpersulfat, sowie Redoxkatalysatoren, beispielsweise Kombinationen aus Ammoniumpersulfat und Ammoniumhydrogensulfat, oder Wasserstoffperoxid und Ascorbinsäure, oder Wasserstoffperoxid und Eisen(II)-Salzen, sowie tert.-Butylhydroperoxid und Natrium-Formaldehyd-Sulfoxylat. Weiterhin können auch organische Peroxide, Percarbonate und Azoverbindungen eingesetzt werden, vorzugsweise Dibenzoylperoxid, Azobisisobutyronitril, tert. Butylperoxydiethylorthoacetat und tert.-Butylperoxy-2-ethylhexanoat. Die Menge der eingesetzten Initiatoren liegt bei 0,1 bis 2 Gew.-%, vorzugsweise 0,2 bis 1 Gew.-%, bezogen auf die Gesamtmenge der eingesetzten Monomeren. Die aufgeführten Initiatoren können auch in Mischung verwendet werden.

Die Dosierung der Monomeren mit Ausnahme von Ethylen kann in Form einer Monomermischung oder in Form einer Monomeremulsion erfolgen. Im Falle einer Monomeremulsion können diese Schutzkolloid- und/oder Emulgator-stabilisiert sein. Zur Stabilisierung der Monomeremulsion finden die bereits genannten Celluloseether als Schutzkolloide Verwendung. Zusätzlich können auch weitere übliche Schutzkolloide und Emulgatoren, vorzugsweise anionische oder nicht ionische Emulgatoren eingesetzt werden. Die aufgeführten Initiatorsysteme können bei der Dispersionsherstellung ganz oder teilweise im Reaktionsautoklaven vorgelegt oder teilweise mit der Monomeremulsion oder als Lösung zudosiert werden. Die Monomeren können kontinuierlich oder diskontinuierlich, also im Dosier-, im Batch- oder auch in einem kombinierten Batch-Dosier-Verfahren polymerisiert werden. Vorzugsweise werden bis zu 50 Gew.-%, insbesondere bis zu 20 Gew.-%, der Monomere mit Ausnahme von Ethylen vorgelegt und der Rest während der Polymerisation kontinuierlich oder diskontinuierlich zudosiert.

Bei der Herstellung der erfindungsgemäßen Dispersionen erfolgt die Ethylendosierung gasförmig unter einem Ethylendruck im Bereich von 30 bis 100 bar, vorzugsweise 40 bis 80 bar und bei einer Reaktionstemperatur von 45 bis 90°C, bevorzugt 50 bis 85°C. Der Ethylendruck kann während der Polymerisation konstant gehalten oder variiert werden.

Der Anteil des gepfropften Celluloseethers ist so bemessen, daß keine Phasenseparation in der erhaltenen Dispersion erfolgt und beträgt vorzugsweise mindestens 50 Mol-%, insbesondere mindestens 75 Mol-%, bezogen auf den eingesetzten Celluloseether.

Infolge der hohen Pfropfraten auf die Celluloseether bei der erfindungsgemäßen Copolymerisation von Ethylen, Vinylacetat, Methacryl- sowie Acrylsäure und deren Ester mit (C₂-C₁₈)-Alkoholen oder Maleinsäurediester oder Vinylester entsteht eine wäßrige Dispersion, die das gewünschte Verklebungsprofil für Polyolefinmaterialien neben dem hervorragenden Klebstoffeigenschaftsbild für alle gängigen Materialien, beispielsweise Polyvinylchlorid, Polystyrol, Polyester erfüllt (Beispiele 1-5). Dieses Klebstoffeigenschaftsprofil ergibt sich durch die sehr gute Benetzungfähigkeit der derart hergestellten Dispersionen auf allen gängigen Kunststoffoberflächen und die nach der Verklebung auftretende hohe Adhäsion zu den Substraten (Tabelle 1). Dieses Eigenschaftsbild ist überraschenderweise nahezu unabhängig von dem Molekulargewicht des resultierenden Copolymerisates und resultiert maßgeblich aus der Celluloseether-Pfropfrate.

Die erfindungsgemäßen Dispersionen lassen sich extrem arm an flüchtigen organischen Bestandteilen (VOC-arm) herstellen, so daß sie zusätzlich dem verstärkten Umweltbewußtsein entsprechen. Zur VOC-Reduktion können die fertiggestellten Dispersionen nach dem in EP-B 0 327 006 beschriebenen Verfahren hergestellt werden. Dazu wird die fertige Dispersion nachträglich mit geringen Mengen üblicher Entschäumer auf Basis natürlicher Fette und Öle, beispielsweise Spermöl, Tranöle, Paraffinöl, langkettigen Alkohole, wie Fettalkohol und hochpolymeren Glykole und Gemische dieser Alkohole mit Fetten sowie Fettsäurepolyglykolester, Sorbitmonolaurat und Silikonen versetzt. Verwendet werden 0,001 bis 0,5 Gew.-%, bezogen auf die Dispersion. Die Dispersion wird zur Restmonomerenentfernung unter zweimaligem Zusatz von 1 l Wasser und unter Anlegen von Vakuum innerhalb von jeweils 2 Stunden destilliert. Die Gesamtmenge des abdestillierten Wassers beträgt 3 l. Dadurch werden Restmonomer-arme Dispersionen mit einem Gesamt-VOC-Gehalt von max. 0,1 Gew.-%, insbesondere von max. 0,05 Gew.-%, erhalten.

Die Dispersionen können, um sie vor dem Befall durch Pilze und Bakterien zu schützen, nach gängigen Verfahren konserviert werden. Zur Konservierung werden nur sehr geringe Mengen an bioziden Zusatzstoffen verwendet. Andererseits kann durch Erhitzen des fertigen Mittels während 15 bis 120 Minuten auf Temperaturen von 60 bis 120°C eine Konservierung erreicht werden, beispielsweise durch Pasteurisieren oder Tyndallisieren (auch fraktionierte Sterilisation genannt), ferner durch Kühlen, sowie durch Ausschluß von Luft bei der Lagerung in gasdichten Gebinden unter Inertgas. Auch Ultraschall, UV-Bestrahlung und Hochfrequenzfelder können zur Konservierung verwendet werden. Weiterhin sind Zusätze minimaler Mengen von Antibiotika, beispielsweise Terramycin, Streptomycin und Subtilin geeignet, ebenso Chinosol (äquimolare Verbindung aus o-Oxychinolinsulfat und Kaliumsulfat). Als wirksame Mittel zur Konservierung können ferner in kleinsten Mengen eingesetzt werden: Chloracetamid, Natriumbenzoat, Methyl-, Ethyl- und Propylester der p-Hydroxybenzoesäure und deren Natriumverbindungen, Natriumsorbat, Natriumformiat, Natriumborat sowie Borax, Wasserstoffperoxid, Milchsäure, Ameisensäure, Propionsäure, Nitrite und Nitrate, Salicylsäure, Dehydracetsäure, Thymol (Methylisopropylphenol), Bariummetaborat, Dithiocarbaminate, Chlormethylisothiazolinon und Benzisothiazolinon.

Gegenstand der vorliegenden Erfindung ist auch die Verwendung einer wäßrigen Dispersion, die einen Celluloseether in zumindest teilweise gepfropfter Form und ein Copolymerisat mit einer Glasübergangstemperatur von -40 bis 0 °C enthält, hergestellt durch Polymerisation im wesentlichen von Vinylacetat, Ethylen sowie Comonomeren aus der Gruppe Vinylester aliphatischer (C₃-C₁₈)-Carbonsäuren, Acrylsäureester, Methacrylsäureester und Maleinsäurediester aliphatischer (C₁-C₁₈)-Alkohole in Gegenwart von 0,05 bis 5 Gew.-% α,β-ungesättigten Carbonsäuren, 0 bis 5 Gew.-% Epoxy- oder Hydroxylgruppen tragenden Methacrylsäureestern oder Acrylsäureestern und 1,5 bis 20 Gew.-% Celluloseether, jeweils bezogen auf die Gesamtmenge der eingesetzten Monomeren, als Klebstoff insbesondere zum Verkleben von Polyolefinen.

Die erfindungsgemäß als Klebstoff zu verwendenden Copolymerisate können neben den aufgeführten Monomereinheiten außerdem olefinisch ungesättigte Verbindungen wie (C₃-C₁₂)-*α*-Olefine, beispielsweise Propylen, Isobutylen, Vinylether, beispielsweise Vinylethylether, Vinyl-n-butylether, sowie Acrylnitril, Methacrylnitril, Vinylchlorid, N-Vinylpyrrolidon, in einer Menge bis zu 10 Gew.-%, vorzugsweise bis zu 5 Gew.-%, bezogen auf die Gesamtmenge der eingesetzten Monomeren, enthalten.

Des weiteren können Monomereinheiten, die Silicium enthalten, beispielsweise Vinyltrimethoxysilan, Vinyltriethoxysilan, in einer Menge bis zu 2 Gew.-%, vorzugsweise bis zu 0,5 Gew.-%, insbesondere bis zu 0,25 Gew.-%, bezogen auf die Gesamtmenge der eingesetzten Monomeren, in den erfindungsgemäß als Klebstoffe zu verwendenden Dispersionspolymeren enthalten sein.

Die erfindungsgemäß hergestellten wäßrigen VOC-armen Dispersionsklebstoffe erfüllen die Klebstoffeigenschaften auf allen gängigen Kunststoffmaterialien mit sehr hohen Werten. Sie sind extrem stabil gegenüber möglichen Fremdzusätzen, beispielsweise Harzen, Kreiden, Weichmachern, die beispielsweise für die Herstellung von Fußbodenklebstoffen mit einem Füllgrad bis zu 90 Gew.-% zugesetzt werden, sowie gegenüber Metallsalzen und anderen wasserlöslichen Polymerzusätzen.

Als Metallsalze können beispielsweise die Halogenide, Sulfate, Nitrate, Phosphate, also wasserlösliche Salze der Metallkationen der beispielhaft aufgeführten Elemente Ti, V, Cr, Mn, Fe, Co, Ni, Cu, Zn, Ge, Mo, Zr, Ru, Rh, Pd, Ag, Cd, In, Sn, Sb, Al, Si, As, W, Pt, Au, Hg, Pb, Bi der Dispersion als Nachgaben in einer Menge bis zu 10 Gew.-%, bezogen auf die Dispersion, zugemischt werden. Die Zugabe dieser Metallsalze zu den erfindungsgemäßen Polymerisaten führt nach der Verklebung zu einer deutlichen Steigerung der Verklebungsfestigkeit. Beobachtet wird eine Steigerung der Schälfestigkeit, der Zugscherfestigkeit und Creepfestigkeit sowohl auf den gängigen Polymermaterialien wie PVC, Polyester, Polyurethanschäume als auch auf Polyolefinmaterialien sowohl auf modifizierten als auch auf nicht modifizierten Substraten.

Die erfindungsgemäßen Klebstoffdispersionen können nachträglich weiter modifiziert werden. Dazu können beispielsweise wasserlösliche Copolymerisate auf Acryl- bzw. Methacrylsäurebasis, wie Acrylsäure/Acrylamid- und Methacrylsäure/Acrylestercopolymerisate, beispielsweise auch wasserlösliche Copolymerisate auf Basis Styrol-Maleinsäureanhydrid, Ethylen-Maleinsäureanhydrid, EthylenAcrylsäure, Ethylen-Methacrylsäure, Cellulosederivate, wie Methylcellulose, Hydroxethylcellulose und Carboxymethylcellulose oder Casein, Gummiarabicum, Tragantgummi, Stärke, Natriumalginat, Polyvinylalkohol, Polyvinylpyrrolidon oder Natriumpolyacrylat zugesetzt werden.

Die in den nachfolgenden Beispielen verwendeten Teile und Prozente beziehen sich auf das Gewicht, soweit nicht anders vermerkt.

Der Ethylenanteil in den Copolymeren ist aus dem Feststoffgewicht des Copolymerisats abzüglich der Einsatzmengen der übrigen Comonomere errechnet.

Die Beispiele und Vergleichsbeispiele werden in einem 30 I-Druckautoklaven mit Mantelkühlung und zugelassenem Druckbereich bis 120 bar ausgeführt.

### Beispiel 1:

In einer Druckapparatur mit Rührer, Mantelheizung und Dosierpumpen wird eine wäßrige Lösung, bestehend aus folgenden Bestandteilen, eingegeben:

| | |
|---|---|
| 5000 g | E-Wasser (entionisiertes Wasser), |
| 55 g | Natrium-Acetat-Trihydrat, |
| 2000 g | einer 20%igen wäßrigen Lösung von mit 30 Mol Ethylenoxid oxethyliertem Nonylphenol, |
| 4050 g | einer 5%igen wäßrigen Hydroxyethylcelluloselösung (Viskosität der 2%igen wäßrigen Lösung: 300 mPa·s), |
| 225 g | einer 30%igen wäßrigen Natriumvinylsulfonatlösung sowie |
| 12,2 g | ®Rongalit (Natrium-Formaldehyd-Sulfoxylat, BASF) als Reduktionsmittel. |

Die Apparatur wird von Luftsauerstoff befreit, dann wird der erste Teil der Monomerenmischung in den Kessel eingeführt und Ethylen in die Apparatur eingedrückt.

Monomermischung in der Vorlage:

| | |
|---|---|
| 4200 g | Vinylacetat, |
| 80 g | Acrylsäure und |
| 600 g | 2-Ethylhexylacrylat. |

Die restliche Monomermischung, die zudosiert wird, besteht aus:

| | |
|---|---|
| 10 g | einer Mischung aus Methacrylsäure und Acrylsäure im Verhältnis 1 : 5, |
| 60 g | Hydroxyethylmethacrylat, |
| 3000 g | 2-Ethylhexylacrylat und |
| 4200 g | Vinylacetat. |

Initiatorlösung:

| | |
|---|---|
| 40 g | Ammoniumpersulfat in |
| 630 g | Wasser. |

Bei einem Ethylendruck von 40 bar und einer Innentemperatur von 45°C werden 10% der Monomermischung und 20% der Initiatorlösung zugegeben und der Ethylendruck auf 50 bar gesteigert. Bei einer Innentemperatur von 65°C wird einen Zeitraum von 9 Stunden die restliche Monomermischung parallel zur Initiatorlösung zudosiert. Der Ethylendruck wird konstant auf 50 bar gehalten und nach Beendigung der Dosierung wird die Ethylenzufuhr gestoppt und die Innentemperatur 2 Stunden bei dieser Temperatur gehalten. Unter Rühren wird anschließend der größte Teil des Ethylens ausgegast und in einem Gasometer aufgefangen, dann wird der Restmonomerengehalt nach der schon beschriebenen Art der Wasserdampfdestillation reduziert.

### Charakteristische Daten der Beispieldispersion 1:

| | |
|---|---|
| Trockensubstanz: | 54% |
| pH (Elektrodenmessung): | 4,6 |
| Viskosität nach Brookfield, T = RT, Sp 5, 20UPM: | 3600 mPa·s |
| Restmonomergehalt: | <0,05% |
| Glasübergangstemperatur des Polymerisats: | -8,5°C |
| Ethylenanteil im Polymerisat: | 538 g |

### Beispiel 2:

In einer Druckapparatur mit Rührer, Mantelheizung und Dosierpumpen wird eine wäßrige Lösung, bestehend aus folgenden Bestandteilen, eingegeben:

| | |
|---|---|
| 5000 g | E-Wasser, |
| 55 g | Natrium-Acetat-Trihydrat, |
| 2000 g | einer 20%igen wäßrigen Lösung von mit 30 Mol Ethylenoxid oxethyliertem Nonylphenol, |
| 4050 g | einer 5%igen wäßrigen Hydroxyethylcelluloselösung (Viskosität der 2%igen wäßrigen Lösung: 300 mPa·s), |
| 225 g | einer 30%igen wäßrigen Natriumvinylsulfonatlösung sowie |
| 2,7 g | Rongalit als Reduktionsmittel. |

Die Apparatur wird von Luftsauerstoff befreit, und es wird Ethylen in die Apparatur eingedrückt. Die Monomermischung, die zudosiert wird, besteht aus:

| | |
|---|---|
| 60 g | einer Mischung aus Methacrylsäure und Acrylsäure im Verhältnis 1:5, |
| 60 g | Glycidylmethacrylat, |
| 3500 g | 2-Ethylhexylacrylat und |
| 8400 g | Vinylacetat. |

Initiatorlösung:

| | |
|---|---|
| 40 g | Ammoniumpersulfat in |
| 630 g | Wasser. |

Bei einem Ethylendruck von 40 bar und einer Innentemperatur von 45 ° C werden 10% der Monomermischung und 20% der Initiatorlösung zugegeben. Die Reaktionsmischung wird auf 80°C aufgeheizt und der Ethylendruck auf 55 bar gesteigert. Nach 30 Minuten wird die Innentemperatur auf 65°C erniedrigt. Gleichförmig wird über einen Zeitraum von 8 Stunden die Monomermischung parallel zur Initiatorlösung zudosiert. Der Ethylendruck wird konstant auf 55 bar gehalten und nach 4h wird die Ethylenzufuhr gestoppt, die Monomeren- und Initiatordosierung wird nach 8h beendet und die Innentemperatur 2 Stunden bei dieser Temperatur gehalten. Unter Rühren wird anschließend der größte Teil des Ethylens ausgegast und in einem Gasometer aufgefangen, dann wird der Restmonomerengehalt nach der schon beschriebenen Art der Wasserdampfdestillation reduziert.

### Charakteristische Daten der Beispieldispersion 2:

| | |
|---|---|
| Trockensubstanz | 53,5% |
| pH (Elektrodenmessung) | 4,6 |
| Restmonomergehalt | < 0,02% |
| Viskosität nach Brookfield, T = RT, Sp 5, 20UPM | 3000 mPa·s |
| Glasübergangstemperatur des Polymerisats | -12°C |
| Ethylenanteil im Polymerisat | 193 g |

### Beispiel 3:

In einer Druckapparatur mit Rührer, Mantelheizung und Dosierpumpen wird eine wäßrige Lösung, bestehend aus folgenden Bestandteilen, eingegeben:

| | |
|---|---|
| 5000 g | E-Wasser, |
| 55 g | Natrium-Acetat-Trihydrat, |
| 2000 g | einer 20%igen wäßrigen Lösung von mit 30 Mol Ethylenoxid oxethyliertem Nonylphenol, |
| 4050 g | einer 5%igen wäßrigen Hydroxyethylcelluloselösung (Viskosität der 2%igen wäßrigen Lösung: 300 mPa·s), |
| 225 g | einer 30%igen wäßrigen Natriumvinylsulfonatlösung sowie |
| 2,7 g | Rongalit als Reduktionsmittel. |

Die Apparatur wird von Luftsauerstoff befreit, und es wird Ethylen in die Apparatur eingedrückt. Die Monomermischung, die zudosiert wird, besteht aus:

| | |
|---|---|
| 60 g | einer Mischung aus Methacrylsäure und Acrylsäure im Verhältnis 1:5, |
| 60 g | Hydroxyethylmethacrylat, |
| 2800 g | 2-Ethylhexylacrylat und |
| 9100 g | Vinylacetat. |

Initiatorlösung:

| | |
|---|---|
| 40 g | Ammoniumpersulfat in |
| 630 g | Wasser. |

Bei einem Ethylendruck von 40 bar und einer Innentemperatur von 45°C werden 10% der Monomermischung und 20% der Initiatorlösung zugegeben. Die Reaktionsmischung wird auf 80 ° C aufgeheizt und der Ethylendruck auf 50 bar gesteigert. Nach 30 Minuten wird die Innentemperatur auf 65°C erniedrigt. Gleichförmig wird über einen Zeitraum von 8 Stunden die Monomermischung parallel zur Initiatorlösung zudosiert. Der Ethylendruck wird konstant auf 50 bar gehalten und nach Beendigung der Dosierung wird die Ethylenzufuhr gestoppt und die Innentemperatur 2 Stunden bei 80°C gehalten. Unter Rühren wird anschließend der größte Teil des Ethylens ausgegast und in einem Gasometer aufgefangen, dann wird der Restmonomerengehalt nach der schon beschriebenen Art der Wasserdampfdestillation reduziert.

### Charakteristische Daten der Beispieldispersion 3:

| | |
|---|---|
| Trockensubstanz | 55% |
| pH (Elektrodenmessung) | 4,7 |
| Restmonomergehalt | < 0,02% |
| Viskosität nach Brookfield, T = RT, Sp 5, 20UPM | 1250 mPa·s |
| Glasübergangstemperatur des Polymerisats | -12°C |
| Ethylenanteil im Polymerisat | 622 g |

### Beispiel 4:

In einer Druckapparatur mit Rührer, Mantelheizung und Dosierpumpen wird eine wäßrige Lösung, bestehend aus folgenden Bestandteilen, eingegeben:

| | |
|---|---|
| 5000 g | E-Wasser, |
| 55 g | Natrium-Acetat-Trihydrat, |
| 2400 g | einer 20%igen wäßrigen Lösung von mit 30 Mol Ethylenoxid oxethyliertem Nonylphenol, |
| 5250 g | einer 5%igen wäßrigen Hydroxyethylcelluloselösung (Viskosität der 2%igen wäßrigen Lösung: 300 mPa·s) und |
| 225 g | einer 30%igen wäßrigen Natriumvinylsulfonatlösung. |

Die Apparatur wird von Luftsauerstoff befreit, und es wird Ethylen in die Apparatur eingedrückt. Die Monomermischung, die zudosiert wird, besteht aus:

| | |
|---|---|
| 60 g | einer Mischung aus Methacrylsäure und Acrylsäure im Verhältnis 1:5, |
| 60 g | Hydroxyethylmethacrylat, |
| 2800 g | ® VeoVa11 (Shell Chemie, Vinylester einer verzweigten C₁₁-Carbonsäure) und |
| 9100 g | Vinylacetat. |

Initiatorlösung:

| | |
|---|---|
| 40 g | Ammoniumpersulfat in |
| 630 g | Wasser. |

Die Fahrweise und Restmonomerenreduktion erfolgt entsprechend der in Beispiel 3 dargestellten Weise.

### Charakteristische Daten der Beispieldispersion 4:

| | |
|---|---|
| Trockensubstanz | 54% |
| pH (Elektrodenmessung) | 4,7 |
| Restmonomergehalt | < 0,07% |
| Viskosität nach Brookfield, T = RT, Sp 5, 20UPM | 3600 mPa·s |
| Glasübergangstemperatur des Polymerisats | -12,5°C |
| Ethylenanteil im Polymerisat | 1075 g |

### Beispiel 5:

In einer Druckapparatur mit Rührer, Mantelheizung und Dosierpumpen wird eine wäßrige Lösung, bestehend aus folgenden Bestandteilen, eingegeben:

| | |
|---|---|
| 3000 g | E-Wasser, |
| 55 g | Natrium-Acetat-Trihydrat, |
| 1600 g | einer 20%igen wäßrigen Lösung von mit 30 Mol Ethylenoxid oxethyliertem Nonylphenol, |
| 3050 g | einer 5%igen wäßrigen Hydroxyethylcelluloselösung (Viskosität der 2%igen wäßrigen Lösung: 300 mPa·s), |
| 1050 g | einer 5%igen wäßrigen Hydroxyethylcellulose (Viskosität der 2%igen wäßrigen Lösung: 4000 mPa·s), |
| 300 g | einer 30%igen wäßrigen Natriumvinylsulfonatlösung sowie |
| 1 g | Rongalit als Reduktionsmittel. |

Die Apparatur wird von Luftsauerstoff befreit, und es wird Ethylen in die Apparatur eingedrückt. Die zu dosierende Monomermischung besteht aus:

| | |
|---|---|
| 60 g | einer Mischung aus Methacrylsäure und Acrylsäure im Verhältnis |
| | 1:5, |
| 80 g | Hydroxyethylmethacrylat, |
| 1200 g | ® VeoVa11, |
| 1200 g | n-Butylacrylat und |
| 5500 g | Vinylacetat. |

Initiatorlösung:

| | |
|---|---|
| 30 g | Ammoniumpersulfat in |
| 800 g | Wasser. |

Bei einem Ethylendruck von 40 bar und einer Innentemperatur von 45°C werden 10% der Monomermischung und 20% der Initiatorlösung zugegeben. Die Reaktionsmischung wird auf 80°C aufgeheizt und der Ethylendruck auf 50 bar gesteigert. Nach 20 Minuten Reaktionszeit wird auf 65°C abgekühlt. Gleichförmig wird über einen Zeitraum von 5 Stunden die Monomermischung parallel zur Initiatorlösung zudosiert. Der Ethylendruck wird konstant auf 50 bar gehalten und nach Beendigung der Dosierung wird die Ethylenzufuhr gestoppt und die Innentemperatur 2 Stunden bei dieser Temperatur gehalten. Unter Rühren wird anschließend der größte Teil des Ethylens ausgegast und in einem Gasometer aufgefangen, dann wird der Restmonomerengehalt nach der schon beschriebenen Art der Wasserdampfdestillation reduziert.

### Charakteristische Daten der Beispieldispersion 5:

| | |
|---|---|
| Trockensubstanz | 54% |
| pH (Elektrodenmessung) | 4,6 |
| Viskosität nach Brookfield, T = RT, Sp 5, 20UPM | 2300 mPa·s |
| Restmonomergehalt | < 0,07% |
| Glasübergangstemperatur des Polymerisats | -14,1°C |
| Ethylenanteil im Polymerisat | 561 g |

### Beispiel 6:

100 Teile der Dispersion des Beispiels 3 werden mit 2 Teilen ZnCl₂ versetzt.

### Beispiel 7:

100 Teile der Dispersion des Beispiels 4 werden mit 1 Teil Al₂(SO₄)₃ versetzt.

### Beispiel 8:

100 Teile der Dispersion des Beispiels 2 werden mit 2 Teilen AlCl₃ versetzt.

### Beispiel 9:

100 Teile der Dispersion des Beispiels 1 werden mit 0,5 Teilen FeCl₃ versetzt.

### Vergleichsbeispiel 1:

In einer Druckapparatur mit Rührer, Mantelheizung und Dosierpumpen wird eine wäßrige Lösung, bestehend aus folgenden Bestandteilen, eingegeben:

| | |
|---|---|
| 4600 g | E-Wasser, |
| 61 g | Natrium-Acetat-Trihydrat, |
| 757 g | einer 20%igen wäßrigen Lösung von mit 30 Mol Ethylenoxid oxethyliertem Nonylphenol, |
| 5891 g | einer 5%igen wäßrigen Hydroxyethylcelluloselösung (Viskosität der 2%igen wäßrigen Lösung beträgt 300 mPa·s), |
| 246 g | einer 30%igen wäßrigen Natriumvinylsulfonatlösung sowie |
| 15 g | einer 1%igen wäßrigen Lösung von Eisen-(II)-Sulfat-Heptahydrat; |

Als Monomermischung werden zudosiert:

| | |
|---|---|
| 12847 g | Vinylacetat, |
| 60 g | Acrylsäure und Methacrylsäure im Verhältnis 1:5, |
| 60 g | Hydroxyethylmethacrylat und |
| 148 g | Vinyltrimethoxysilan. |

Die Apparatur wird von Luftsauerstoff befreit, und es wird Ethylen in die Apparatur eingedrückt. Bei einem Ethylendruck von 20 bar und einer Innentemperatur von 45°C werden 2537 g der Monomermischung und 10% einer Reduktionsmittellösung aus 11,7 g Rongalit in 860 g Wasser eindosiert. Es wird auf 60°C Innentemperatur erhitzt und dabei der Ethylendruck auf 50 bar gesteigert. Nun werden 10% der Initiatorlösung aus 11,7 g tert.-Butylhydroperoxid in 860 g Wasser zudosiert und zur Abführung der Reaktionswärme gekühlt. Der Ethylendruck wird konstant auf 50 bar gehalten. Parallel werden die 90% der Reduktionsmittellösung, die 90% der Initiatorlösung und das restliche Monomere in 8 Stunden zudosiert. Danach wird eine Lösung aus 14,8 g Natriumpersulfat in 344 g Wasser zudosiert und die Innentemperatur auf 80°C erhöht und 1 Stunde bei dieser Temperatur gehalten. Unter Rühren wird anschließend der Großteil des nicht umgesetzten Ethylens ausgegast und in einem Gasometer aufgefangen und es werden 2 l Wasser zugegeben. Dann werden unter Anlegen von Vakuum innerhalb von 2 Stunden 2,6 l Wasser abdestilliert. Die Destillation wird noch einmal wiederholt.

### Charakteristische Daten der Vergleichsbeispieldispersion 1:

| | |
|---|---|
| Trockensubstanz | 51% |
| pH (Elektrodenmessung) | 4,8 |
| Restmonomergehalt | 0,012% |
| Viskosität nach Brookfield, T = RT, Sp 3, 20UPM | 1800 mPa·s |
| Glasübergangstemperatur des Polymerisats | 7,1 °C |
| Ethylenanteil im Polymerisat | 913 g |

### Vergleichsbeispiel 2:

**a)** In einer Druckapparatur mit Rührer, Mantelheizung und Dosierpumpen wird eine wäßrige Lösung, bestehend aus folgenden Bestandteilen, eingegeben:

| | |
|---|---|
| 5100 g | E-Wasser, |
| 150 g | einer 20%igen wäßrigen Lösung von mit 30 Mol Ethylenoxid oxethyliertem Nonylphenol, |
| 1,5 g | Natriumacetat-Trihydrat, |
| 225 g | einer 30%igen wäßrigen Natriumvinylsulfatlösung, |
| 1350 g | einer 40%igen wäßrigen Lösung von Natriumalkylarylsulfat mit 3 Mol Ethylenoxid ethoxyliert, |
| 0,15g | Eisen-(II)-sulfat sowie |
| 6 g | Rongalit. |

Die Apparatur wird von Luftsauerstoff befreit, und es wird das vorzulegende Monomere in die Apparatur vorgelegt. Die Monomervorlage besteht aus 9000 g Vinylacetat.
Dann wird Ethylen in die Apparatur eingedrückt und die Innentemperatur auf 50 ° C erhöht. Sobald ein Ethylendruck von 55bar erreicht ist, wird die Ethylenzufuhr gestoppt und mit der Dosierung der Monomeremulsion (aus 3000 g n-Butylacrylat, 405 g Acrylsäure, 7,5 g Triallylcyanurat, 270 g einer 48%igen Lösung von N-Methylolacrylamid in 900 g einer 20%igen Lösung von Natriumalkylarylsulfat mit 3 Mol Ethylenoxid, 490 g einer 30%igen Lösung eines Alkylarylethoxylates mit 30 Mol Ethylenoxid und 11,5 g Natriumacetat in 660 g Wasser), des Initiators aus 75 g tert.-Butylhydroperoxid in 600 g Wasser und der Redoxkomponente aus 75 g Rongalit in 600 g Wasser) begonnen. Die Dosierzeit beträgt 4 h für die Monomeremulsion und 5 h für die Initiator- und Reduktionslösung. Während der Polymerisation steigt die Reaktionstemperatur auf 60 bis 65 ° C. Der Restmonomerengehalt kann nach einem der beschriebenen Verfahren reduziert werden.
**b)** Die gleiche Rezeptur kann unter Zusatz von 20 g einer 5%igen wäßrigen Hydroxyethylcelluloselösung (Viskosität der 2%igen wäßrigen Lösung beträgt 300 mPa·s) zur Vorlage wiederholt werden. Die charakteristischen Dispersionsdaten bleiben unverändert.

### Charakteristische Daten der Vergleichsbeispieldispersion 2:

| | |
|---|---|
| Trockensubstanz | 58% |
| pH (Elektrodenmessung) | 4,0 |
| Viskosität nach Brookfield, T = RT, Sp 3, 20Upm | 1800 mPa·s |
| Glasübergangstemperatur des Polymerisats | -10°C |
| Ethylenanteil im Polymerisat | 461 g |

### Test der Verklebungsfestigkeit auf ® Mipolam 900 Color (Hüls, Troisdorf)

Zur Ausführung der Versuche wurden die Verklebungen unter klimatisierten Bedingungen bei den angegebenen Temperaturen gelagert und anschließend auf ihre Verklebungsfestigkeiten entsprechend der Vorschrift DIN 16860 geprüft.

**Tabelle 1:**

| Beispiel | Zugscherfestigkeit [N/cm²] | | | Schälwiderstand [N/cm] | | |
|---|---|---|---|---|---|---|
| | 23°C | 50°C | 70°C | 23°C | 50°C | 70°C |
| 1 | 94 | 87 | 106 | 12 | 8 | 9 |
| 2 | 97 | 93 | 110^{*)} | 11 | 7 | 10 |
| 3 | 94 | 101 | 113^{*)} | 18 | 11 | 14 |
| 4 | 78 | 104^{*)} | 114^{*)} | 25 | 24 | 22 |
| 5 | 95 | 95 | 109^{*)} | 16 | 10 | 13 |
| 6 | 98 | 105^{*)} | 110^{*)} | 22 | 19 | 17 |
| 7 | 81 | 105^{*)} | 109^{*)} | 26 | 26 | 25 |
| 8 | 98 | 95 | 106 | 12 | 12 | 15 |
| 9 | 94 | 93 | 103 | 15 | 13 | 16 |
| Vergleich 1 | 89 | 78 | 101 | 4 | 2 | 3 |
| Vergleich 2 | 80 | 78 | 88 | 5 | 5 | 5 |

| | | | | | | |
|---|---|---|---|---|---|---|
| ^{*)} Belagriß | | | | | | |

### Herstellung eines Fußbodenklebstoffs:

Die in der Prüfung verwendeten Fußbodenklebstoffe werden in der nachfolgenden Standardrezeptur für Einseitfußbodenklebstoffe frei von Tiefsiedern rezeptiert:

Fußbodenklebstoff:

| | | |
|---|---|---|
| 15 | Teile | Harzschmelze |
| 35 | " | Dispersion |
| 45 | " | Kreide (Korngröße 0-15 µm) |
| 0,1 | " | Entschäumer, beispielsweise ® Agitan 305 (Münzing Chemie, Heilbronn) |
| 0,2 | " | Nonylphenolethoxylat mit EO-Zahlen von 10-30 als 10%ige Lösung |
| 0,1 | " | Konservierungsmittel, beispielsweise ® Mergal K7 (Hoechst) |
| 0,2 | " | Dispergiermittel, beispielsweise ® Additol XW 330 (Hoechst) |
| x | x | Wasser zur Viskositätseinstellung |

Die zur Herstellung der Klebstoffe verwendete Harzschmelze besteht aus:

| | | |
|---|---|---|
| 60 | Teile | Kolophonium |
| 30 | " | ® Alresat KE300 (Hoechst) |
| 10 | " | Butyldiglykolacetat |

Die technischen Daten eines derart hergestellten Einseitfußbodenklebstoffes ergeben sich wie folgt:

| | |
|---|---|
| Feststoffgehalt | ca. 80% |
| Viskosität (Brookfield Sp.7/20UPM) | 25000 mPa·s, pastös |
| Standzeit | ca. 50 Min. |

## Patentansprüche

1. Wäßrige Dispersion, die einen Celluloseether in zumindest teilweise gepfropfter Form und ein Copolymerisat mit einer Glasübergangstemperatur von -40 bis 0 °C enthält, hergestellt durch Polymerisation von Vinylacetat, Ethylen, sowie Comonomeren aus der Gruppe Vinylester aliphatischer (C₃-C₁₈)-Carbonsäuren, Acrylsäureester, Methacrylsäureester und Maleinsäurediester aliphatischer (C₁-C₁₈)-Alkohole in Gegenwart von 0,05 bis 0,95 Gew.-% α,β-ungesättigten Carbonsäuren, 0 bis 0,95 Gew.-% Epoxy- oder Hydroxylgruppen tragenden Methacrylsäureestern oder Acrylsäureestern und 1,5 bis 20 Gew.-% Celluloseether, jeweils bezogen auf die Gesamtmenge der eingesetzten Monomeren.

2. Wäßrige Dispersion nach Anspruch 1, dadurch gekennzeichnet, daß die Glasübergangstemperatur des Copolymerisats -20 bis -5 °C beträgt.

3. Wäßrige Dispersion nach Anspruch 1, dadurch gekennzeichnet, daß sie 1,7 bis 15 Gew.-% Celluloseether, bezogen auf die Gesamtmenge der eingesetzten Monomeren, in zumindest teilweise gepfropfter Form enthält.

4. Wäßrige Dispersion nach Anspruch 1, dadurch gekennzeichnet, daß der Celluloseether hydrophob modifizierte Hydroxyethylcellulose ist.

5. Wäßrige Dispersion nach Anspruch 1, dadurch gekennzeichnet, daß sie 50 bis 70 Gew.-% Vinylacetat, 1,5 bis 9 Gew.-% Ethylen sowie mehr als 25 Gew.-% Monomere aus der Gruppe Vinylester aliphatischer (C₃-C₁₂)-Carbonsäuren, Acrylsäureester, Methacrylsäureester und Maleinsäurediester aliphatischer (C₁-C₁₂)-Alkohole, jeweils bezogen auf die Gesamtmenge der eingesetzten Monomeren, enthält.

6. Wäßrige Dispersion nach Anspruch 1, dadurch gekennzeichnet, daß sie mehr als 25 Gew.-% Monomereinheiten aus der Gruppe 2-Ethylhexylacrylat und Vinylester von α-Dimethyl-verzweigten Carbonsäuren mit 10 bis 11 Kohlenstoffatomen, bezogen auf die Gesamtmenge der eingesetzten Monomeren, enthält.

7. Wäßrige Dispersion nach Anspruch 1, dadurch gekennzeichnet, daß sie zusätzlich bis zu 10 Gew.-% wasserlösliche Metallsalze, bezogen auf die Gesamtmenge der eingesetzten Monomeren, enthält.

8. Verfahren zur Herstellung einer wäßrigen Dispersion nach Anspruch 1 durch Polymerisation von Vinylacetat, Ethylen sowie Comonomeren aus der Gruppe Vinylester aliphatischer (C₃-C₁₈)-Carbonsäuren, Acrylsäureester, Methacrylsäureester und Maleinsäurediester aliphatischer (C₁-C₁₈)-Alkohole in Gegenwart von 0,05 bis 0,95 Gew.-% α,β-ungesättigen Carbonsäuren, 0 bis 0,95 Gew.-% Epoxy- oder Hydroxylgruppen tragenden Methacrylsäureestern oder Acrylsäureestern und 1,5 bis 20 Gew.-% Celluloseether, jeweils bezogen auf die Gesamtmenge der eingesetzten Monomeren.

9. Verwendung einer wäßrigen Dispersion, die einen Celluloseether in zumindest teilweise gepfropfter Form und ein Copolymerisat mit einer Glasübergangstemperatur von -40 bis 0 °C enthält, hergestellt durch Polymerisation im wesentlichen von Vinylacetat, Ethylen sowie Comonomeren aus der Gruppe Vinylester aliphatischer (C₃-C₁₈)-Carbonsäuren, Acrylsäureester, Methacrylsäureester und Maleinsäurediester aliphatischer (C₁-C₁₈)-Alkohole in Gegenwart von 0,05 bis 5 Gew.-% α,β-ungesättigten Carbonsäuren, 0 bis 5 Gew.-% Epoxy- oder Hydroxylgruppen tragenden Methacrylsäureestern oder Acrylsäureestern und 1,5 bis 20 Gew.-% Celluloseether, jeweils bezogen auf die Gesamtmenge der eingesetzten Monomeren, als Klebstoff.

10. Verwendung einer wäßrigen Dispersion nach Anspruch 9 zum Verkleben von Polyolefinen.

## Claims

1. An aqueous dispersion which comprises a cellulose ether in at least partly grafted form and a copolymer having a glass transition temperature of -40 to 0°C, prepared by polymerization of vinyl acetate, ethylene and comonomers from the group consisting of vinyl esters of aliphatic (C₃-C₁₈)-carboxylic acids, acrylic acid esters, methacrylic acid esters and maleic acid diesters of aliphatic (C₁-C₁₈)-alcohols in the presence of 0.05 to 0.95% by weight of α,β-unsaturated carboxylic acids, 0 to 0.95% by weight of methacrylic acid esters or acrylic acid esters which carry epoxide or hydroxyl groups and 1.5 to 20% by weight of cellulose ether, in each case based on the total amount of monomers used.

2. An aqueous dispersion as claimed in claim 1, where the glass transition temperature of the copolymer is -20 to -5°C.

3. An aqueous dispersion as claimed in claim 1, which comprises 1.7 to 15% by weight of cellulose ether, based on the total amount of monomers used, in at least partly grafted form.

4. An aqueous dispersion as claimed in claim 1, wherein the cellulose ether is hydrophobically modified hydroxyethylcellulose.

5. An aqueous dispersion as claimed in claim 1, which comprises 50 to 70% by weight of vinyl acetate, 1.5 to 9% by weight of ethylene and more than 25% by weight of monomers from the group consisting of vinyl esters of aliphatic (C₃-C₁₂)-carboxylic acids, acrylic acid esters, methacrylic acid esters and maleic acid diesters of aliphatic (C₁-C₁₂)-alcohols, in each case based on the total amount of monomers used.

6. An aqueous dispersion as claimed in claim 1, which comprises more than 25% by weight of monomer units from the group consisting of 2-ethylhexyl acrylate and vinyl esters of α-dimethyl-branched carboxylic acids having 10 to 11 carbon atoms, based on the total amount of monomers used.

7. An aqueous dispersion as claimed in claim 1, which additionally comprises up to 10% by weight of water-soluble metal salts, based on the total amount of monomers used.

8. A process for the preparation of an aqueous dispersion as claimed in claim 1 by polymerization of vinyl acetate, ethylene and comonomers from the group consisting of vinyl esters of aliphatic (C₃-C₁₈)-carboxylic acids, acrylic acid esters, methacrylic acid esters and maleic acid diesters of aliphatic (C₁-C₁₈)-alcohols in the presence of 0.05 to 0.95% by weight of α,β-unsaturated carboxylic acids, 0 to 0.95% by weight of methacrylic acid esters or acrylic acid esters which carry epoxide or hydroxyl groups and 1.5 to 20% by weight of cellulose ether, in each case based on the total amount of monomers used.

9. The use of an aqueous dispersion which comprises a cellulose ether in at least partly grafted form and a copolymer having a glass transition temperature of -40 to 0°C, prepared by polymerization essentially of vinyl acetate, ethylene and comonomers from the group consisting of vinyl esters of aliphatic (C₃-C₁₈)-carboxylic acids, acrylic acid esters, methacrylic acid esters and maleic acid diesters of aliphatic (C₁-C₁₈)-alcohols in the presence of 0.05 to 5% by weight of α,β-unsaturated carboxylic acids, 0 to 5% by weight of methacrylic acid esters or acrylic acid esters which carry epoxide or hydroxyl groups and 1.5 to 20% by weight of cellulose ether, in each case based on the total amount of monomers used, as an adhesive.

10. The use of an aqueous dispersion as claimed in claim 9 for gluing polyolefins.

## Revendications

1. Dispersion aqueuse, qui contient un éther de cellulose sous une forme au moins partiellement greffée et un copolymérisat ayant une température de transition vitreuse comprise entre -40 et 0°C, préparée par polymérisation d'acétate de vinyle, d'éthylène et de co-monomères choisis parmi les esters de vinyle d'acides carboxyliques aliphatiques en C₃ à C₁₈, les esters d'acide acrylique, les esters d'acide méthacrylique et les diesters d'acide maléique d'alcools aliphatiques en C₁ à C₁₈ en présence de 0,05 à 0,95% en poids d'acides carboxyliques α,β-insaturés, de 0 à 0,95% en poids d'esters d'acide méthacrylique ou d'esters d'acide acrylique portant des groupesépoxy ou hydroxyle et de 1,5 à 20% en poids d'éther de cellulose, par rapport respectivement à la quantité globale des monomères mis en oeuvre.

2. Dispersion aqueuse selon la revendication 1, caractérisée en ce que la température de transition vitreuse du copolymérisat s'élève à entre -20°C et -5°C.

3. Dispersion aqueuse selon la revendication 1, caractérisée en ce qu'elle contient de 1,7 à 15% en poids d'éther de cellulose, par rapport à la quantité globale des monomères mis en oeuvre, sous une forme au moins partiellement greffée.

4. Dispersion aqueuse selon la revendication 1, caractérisée en ce que l'éther de cellulose est une hydroxyéthylcellulose rendue hydrophobe.

5. Dispersion aqueuse selon la revendication 1, caractérisée en ce qu'elle contient de 50 à 70% en poids d'acétate de vinyle, de 1,5 à 9% en poids d'éthylène et plus de 25% en poids de monomères choisis parmi les esters de vinyle d'acides carboxyliques aliphatiques en C₃ à C₁₂, les esters d'acide acrylique, les esters d'acide méthacrylique et les diesters d'acide maléique d'alcools aliphatiques en C₁ à C₁₂, respectivement par rapport à la quantité globale des monomères mis en oeuvre.

6. Dispersion aqueuse selon la revendication 1, caractérisée en ce qu'elle contient plus de 25% en poids de motifs de monomères choisis parmi l'acrylate de 2-éthylhexyle et les esters de vinyle d'acides carboxyliques α-diméthyl ramifiés ayant de 10 à 11 atomes de carbone, par rapport à la quantité globale des monomères mis en oeuvre.

7. Dispersion aqueuse selon la revendication 1, caractérisée en ce qu'elle contient en plus jusqu'à 10% en poids de sels métalliques hydrosolubles, par rapport à la quantité globale des monomères mis en oeuvre.

8. Procédé pour la préparation d'une dispersion aqueuse selon la revendication 1 par polymérisation d'acétate de vinyle, d'éthylène et de co-monomères choisis parmi les esters de vinyle d'acides carboxyliques aliphatiques en C₃ à C₁₈, les esters d'acide acrylique, les esters d'acide méthacrylique et les diesters d'acide maléique d'alcools aliphatiques en C₁ à C₁₈ en présence de 0,05 à 0,95% en poids d'acides carboxyliques α,β-insaturés, de 0 à 0,95% en poids d'esters d'acide méthacrylique ou d'esters d'acide acrylique portant des groupe époxy ou hydroxyle et de 1,5 à 20% en poids d'éther de cellulose, par rapport respectivement à la quantité globale des monomères mis en oeuvre.

9. Utilisation d'une dispersion aqueuse, qui contient un éther de cellulose sous une forme au moins partiellement greffée et un copolymérisat avec une température de transition vitreuse comprise entre -40 et 0°C, préparée par polymérisation d'acétate de vinyle, d'éthylène et de co-monomères choisis parmi les esters de vinyle d'acides carboxyliques aliphatiques en C₃ à C₁₈, les esters d'acide acrylique, les esters d'acide méthacrylique et les diesters d'acide maléique d'alcools aliphatiques en C₁ à C₁₈ en présence de 0,05 à 0,95% en poids d'acides carboxyliques α,β-insaturés, de 0 à 0,95% en poids d'esters d'acide méthacrylique ou d'esters d'acide acrylique portant des groupe époxy ou hydroxyle et de 1,5 à 20% en poids d'éther de cellulose, par rapport respectivement à la quantité globale des monomères mis en oeuvre, comme adhésif.

10. Utilisation d'une dispersion aqueuse selon la revendication 9 pour le collage de polyoléfines.
